(19) Europäisches Patentamt
European Patent Office
Office européen des brevets

(11) **EP 2 730 949 A2**

(12) # EUROPEAN PATENT APPLICATION

(43) Date of publication:
**14.05.2014 Bulletin 2014/20**

(51) Int Cl.:
**G01V 1/36** (2006.01)

(21) Application number: **13185097.6**

(22) Date of filing: **19.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.09.2012 US 201261702871 P**

(71) Applicant: **CGG Services SA**
**91300 Massy (FR)**

(72) Inventors:
• **Poole, Gordon**
  **91300 MASSY (FR)**
• **Siliqi, Risto**
  **91300 MASSY (FR)**

(74) Representative: **Regimbeau**
**20, rue de Chazelles**
**75847 Paris Cedex 17 (FR)**

(54) **Interference noise attenuation method and apparatus**

(57)    A method for determining interference noise recorded in a first seismic survey of a subsurface generated by a source in a second seismic survey. The method includes receiving (300) seismic data recorded by seismic sensors of the first seismic survey, wherein the seismic data includes seismic waves that originate from the first seismic survey and seismic waves that originate from the second seismic survey; receiving (302) actual relative shooting timing or actual shooting timing of seismic sources of the first and second seismic surveys; applying (304) a processing algorithm to the seismic data to calculate the interference noise, wherein the processing algorithm that takes into consideration the actual relative shooting timing or the actual shooting timing of the seismic sources; and generating (306) a final image of the subsurface based on the recorded seismic data from which the interference noise is subtracted.

FIG. 3

```
┌──────────────────────────────────┐ 300
│   Receive recorded seismic data  │
└──────────────────────────────────┘
                 │
                 ▼
┌──────────────────────────────────┐ 302
│  Receive shooting timing of      │
│         seismic sources          │
└──────────────────────────────────┘
                 │
                 ▼
┌──────────────────────────────────┐ 304
│  Apply processing method based   │
│        on shooting timing        │
└──────────────────────────────────┘
                 │
                 ▼
┌──────────────────────────────────┐ 306
│      Generate final image        │
└──────────────────────────────────┘
```

EP 2 730 949 A2

## Description

## BACKGROUND

## TECHNICAL FIELD

Embodiments of the subject matter disclosed herein generally relate to methods and systems for removing interference noise in seismic data and, more particularly, to mechanisms and techniques for identifying and subtracting seismic signals produced by a seismic source that is not part of the seismic survey.

## DISCUSSION OF THE BACKGROUND

Seismic data acquisition and processing may be used to generate a profile (image) of the geophysical structure under the ground (subsurface). While this profile does not provide an accurate location for oil and gas reservoirs, it suggests, to those trained in the field, the presence or absence of such reservoirs. Thus, providing a high-resolution image of the subsurface is important, for example, to those who need to determine where oil and gas reservoirs are located.

Geophysical prospectors use a seismic source (e.g., air gun, explosive, vibrators (in a marine or land context), etc.) to generate seismic waves. The seismic waves propagate thorough the water (in the case of a marine seismic survey) towards the sea bed. At the sea bed, some of the waves enter the sea bed, some are reflected back to the sea surface while other are refracted and continue to advance along the sea bed. Sooner or later most of the waves return to the surface, either because they were reflected at various interfaces under the sea bed (subsurface) or because they were refracted.

An array of seismic sensors are deployed either on the ocean bottom (ocean bottom nodes or cables) or close to the water surface (streamers). In a towed streamer context, the sensors may be hydrophones and/or particle motion sensors (e.g., accelerometers) or a combination thereof. For land datasets, geophones may be used which measure one or more components of the acoustic and/or elastic wavefield. For ocean bottom data, any combination of geophones, hydrophones, and particle motion sensors (e.g., accelerometers) may be used. The seismic sensors record the reflected/refracted seismic waves. After collecting the seismic data from the sensors, the data is processed either on board of the vessel towing the sensors or at dedicated facilities on the ground. One final product of the processing is the generation of an image of the surveyed subsurface.

A marine seismic survey is now described for illustrating a problem that is present at the processing phase. A narrow azimuth towed streamer 3-dimensional (3D) acquisition includes a single vessel equipped with one or more seismic sources and towing one or more streamers. The vessel is sailed over the survey area until the area is fully covered. In addition, the vessel may be sailed to achieve infill/reshoot data (e.g., to acquire seismic data for parts of the area that was not covered or for which the data was detected to be bad). For a vessel with a given number of streamers and sources, the acquisition time largely depends on the survey size.

Ideally, only one vessel operates at a time in one given geographical region to perform a first seismic survey. When demand for acquisition is high, it is not uncommon for a second seismic survey to be carried on close to the first seismic survey. While this allows data to be acquired quickly, interference noise will contaminate the seismic records. The sources may contain airguns, marine vibrators, or a combination thereof. The interference noise is energy being recorded on the receivers of the first seismic survey and originating from seismic sources of the second seismic survey. While the present example considers one vessel per seismic survey, the interference noise also extends to more than two vessels.

If both surveys are being operated by the same company, the position of vessels can be known in real time. This can allow the level of interference noise to be limited. For example, marine seismic surveys are commonly acquired such that the vessel is sailed in a series of straight lines over the survey area with line turns in-between. Generally, the source is not fired in the line turn, and as such, interference noise will not be recorded. It is not uncommon for line turns to take two or three hours. It is therefore advisable to de-synchronize the line turns so that the vessels from the two or more surveys are not shot at the same time. This allows the duration of the acquisition time free of interference noise to be maximized.

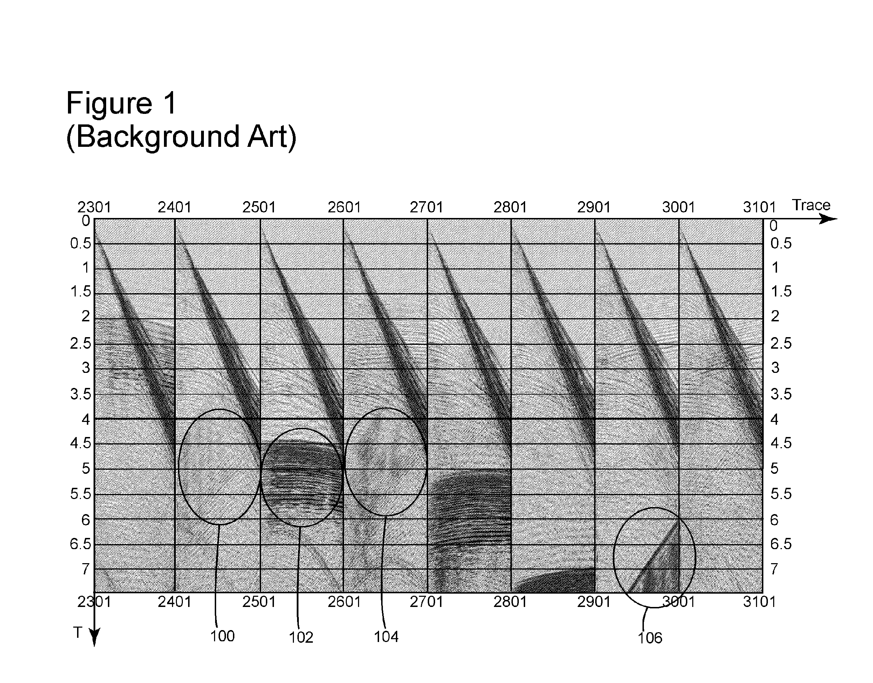

However, even under these considerations, interference noise may be seen in the recorded data. For example, several sources of interference noise 100, 102, 104, and 106 can be observed on the shot gathers in Figure 1 in which at least two other vessels operate in the survey area. Figure 1 plots the recorded traces in time (s).

Various methods currently exist for removing the interference noise. Some of the methods remove the noise through modeling while others use impulsive denoise techniques. Some of the methods do not require knowledge of the relative timing of the noise, while others calculate the relative timing from the data. In addition, knowledge of the position of the source that generated the interference noise can be used to help remove it, as described by N. Gulunay, "Two different algorithms for seismic interference noise attenuation," The Leading Edge, February 2008.

As the timing of the interference noise varies from shot to shot, it is well known that the timing of the interference noise can appear random in other domains other than the shot domain (for example receiver, cmp, offset volume domains). This random characteristic in the receiver domain can be used to attenuate the interference noise with conventional impulsive denoise techniques, as described in Gulunay et al., "Seismic interference noise attenuation," 74th SEG international conference meeting, 2004. The same principle is also used in denoise techniques for simultaneous shooting, where two sources fire as part of acquiring the same survey.

Another category of interference noise removal utilizes knowledge of the relative timing the interference source fired. The knowledge of this timing (calculated from the recorded data) can be used to align the noise, and at the same time misalign the seismic data which we desire to be retained. When impulsive denoise algorithms are used on data aligned for the main seismic, an estimate of the interference noise is made. When the interference noise is aligned, the denoise procedure will make an estimate of the main seismic data. By iterating alignment and iterative denoise, the amplitude of the seismic and the amplitude of the interference noise can be driven down at the same time, often achieving results with higher integrity.

Simultaneous modeling methods also make use of the knowledge of the timing (calculated from the measured data) of the interfering source. This category of methods derive models of the main seismic data (i.e., data that needs to be kept) and the interference noise simultaneously. This is normally achieved through careful parameterization and the use of high resolution model parameter weighting or sparseness constraints. One such example is described in U.S. Patent Application Publication US 2010/0097885 (herein '885). The '885 patent application describes a method that: 1) receives the seismic data, 2) calculates the relative timing of the interference noise from the received seismic data, and 3) attenuates the interference noise using an algorithm that relies on the time shifts derived in step 2).

Traditionally, and as outlined in the '885 patent application, the relative timing of the interference noise is derived from the dataset (for example through cross-correlations and peak picking). However, this step of calculating the relative timing of the interference noise is prone to inaccuracies which negatively affects the quality of the final image.

Thus, there is a need to develop a method that is capable of removing the interference noise from the recorded data without calculating the relative timing of the sources producing the interference noise so that the final image is more accurate.

## SUMMARY OF THE INVENTION

According to an exemplary embodiment, there is a method for determining interference noise recorded in a first seismic survey of a subsurface generated by a source in a second seismic survey. The method includes receiving seismic data recorded by seismic sensors of the first seismic survey, wherein the seismic data includes seismic waves that originate from the first seismic survey and seismic waves that originate from the second seismic survey; receiving actual relative shooting timing of seismic sources of the first and second seismic surveys; applying a processing algorithm to the seismic data to calculate the interference noise, wherein the processing algorithm that takes into consideration the actual relative shooting timing of the seismic sources; and generating a final image of the subsurface based on the recorded seismic data from which the interference noise is subtracted.

According to another exemplary embodiment, there is a method for determining interference noise recorded in a first seismic survey of a subsurface generated by a source in a second seismic survey. The method includes receiving seismic data recorded by seismic sensors of the first seismic survey, wherein the seismic data includes seismic waves that originate from the first seismic survey and seismic waves that originate from the second seismic survey; receiving actual shooting timing and coordinates of seismic sources of the first and second seismic surveys; applying a processing algorithm to the seismic data to calculate the interference noise, wherein the processing algorithm that takes into consideration the actual shooting timing and the coordinates of the seismic sources; and generating a final image of the subsurface based on the recorded seismic data from which the interference noise is subtracted.

According to still another exemplary embodiment, there is a computing device for determining interference noise recorded in a first seismic survey of a subsurface generated by a source in a second seismic survey. The computing device includes an interface that receives seismic data recorded by seismic sensors of the first seismic survey, wherein the seismic data includes seismic waves that originate from the first seismic survey and seismic waves that originate from the second seismic survey. The interface further receives actual relative shooting timing of seismic sources of the first and second seismic surveys. The computing device further includes a processor connected to the interface. The processor is configured to apply a processing algorithm to the seismic data to calculate the interference noise, wherein the processing algorithm that takes into consideration the actual relative shooting timing of the seismic sources, and generate a final image of the subsurface based on the recorded seismic data from which the interference noise is subtracted.

According to still another exemplary embodiment, there is a computer readable medium including computer executable instructions, wherein the instructions, when executed by a processor, implement a method for removing interference noise as noted above.

## BRIEF DESCRIPTION OF THE DRAWINGS

For a more complete understanding of the present invention, reference is now made to the following descriptions taken in conjunction with the accompanying drawings, in which:

Figure 1 illustrates recorded seismic data that includes interference noise;

Figure 2 illustrates a setup for first and second seismic surveys;

Figure 3 is a flow chart of a method for determining interference noise according to an exemplary embodiment;

Figure 4 illustrates main signals and interference noise recorded by seismic sensors of a first seismic survey according to an exemplary embodiment;

Figure 5A illustrates seismic data corresponding to a first shot in the time-space domain and Figure 5B illustrates the same seismic data in the tau-p domain;

Figure 6A illustrates seismic data corresponding to a second shot in the time-space domain and Figure 6B illustrates the same seismic data in the tau-p domain;

Figure 7A illustrates the seismic data in the tau-p domain and Figure 7B illustrates the impulsive noise according to an exemplary embodiment;

Figure 8 is a flowchart of a method illustrating an iterative impulsive denoise mechanism according to an exemplary embodiment;

Figure 9 is a flowchart of a method for illustrating the iterative impulsive denoise mechanism performed in plural domains according to an exemplary embodiment;

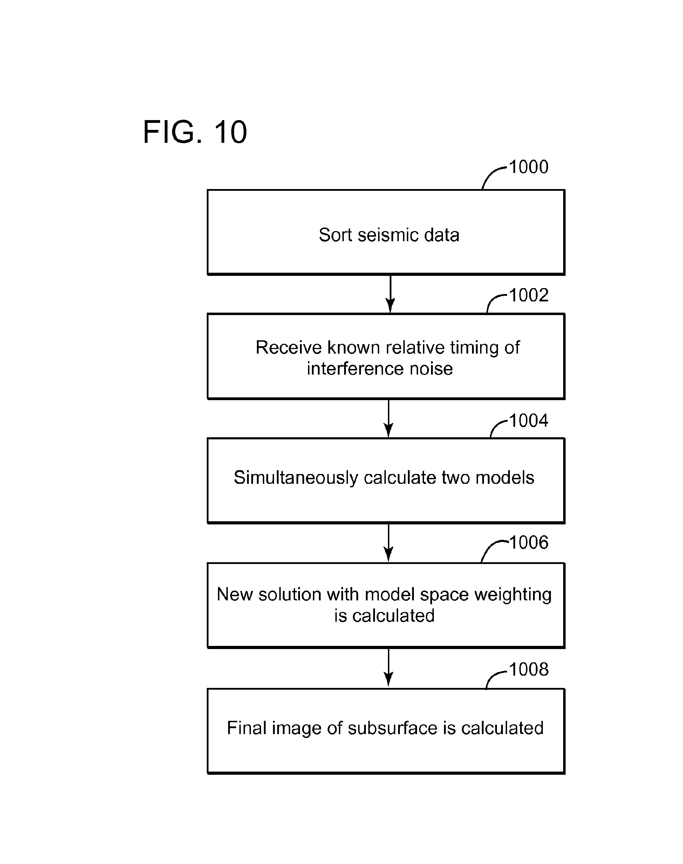

Figure 10 is a flowchart of a method illustrating a joint modeling mechanism according to an exemplary embodiment;

Figure 11 is a schematic diagram of a computing device capable to implement one or more of the methods discussed in the exemplary embodiments.

## DETAILED DESCRIPTION OF THE INVENTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of a marine seismic system that includes two seismic sources. However, the embodiments to be discussed next are not limited to a marine seismic survey or two seismic sources but may be applied to land survey or ocean bottom survey, also with a larger number of sources, etc.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to an exemplary embodiment, the relative timing of the interference sources (i.e., at least seismic sources from a first seismic survey and seismic sources from a second seismic survey) is not calculated as in the traditional methods, but rather the actual relative timing is known from the operators of the seismic surveys. In other words, when both surveys are being acquired by the same company, or when there is co-operation between companies operating the vessels of both surveys, it is possible to share the exact timing and optionally the location of the seismic sources generating the interference noise. Thus, rather than calculating the timing of the interference noise from the data itself, prior to denoise or as part of the denoising algorithm, the timing could be known in advance in a precise manner.

For effective removal of interference noise, it is preferable to record the noise consistently, as will be discussed later. This means that utilizing continuous recording can be of benefit. This may include recording while the spread is turning, i.e., the vessel is on the line turn.

Knowledge of the timing of the interference source can be more accurate than estimating the timing from the data. It can also simplify denoise processes where the noise timing is required. Thus, the novel concepts to be discussed herein can be applied to any method that removes interference noise from seismic data where the knowledge of the timing of the source responsible for the interference noise is known in advance.

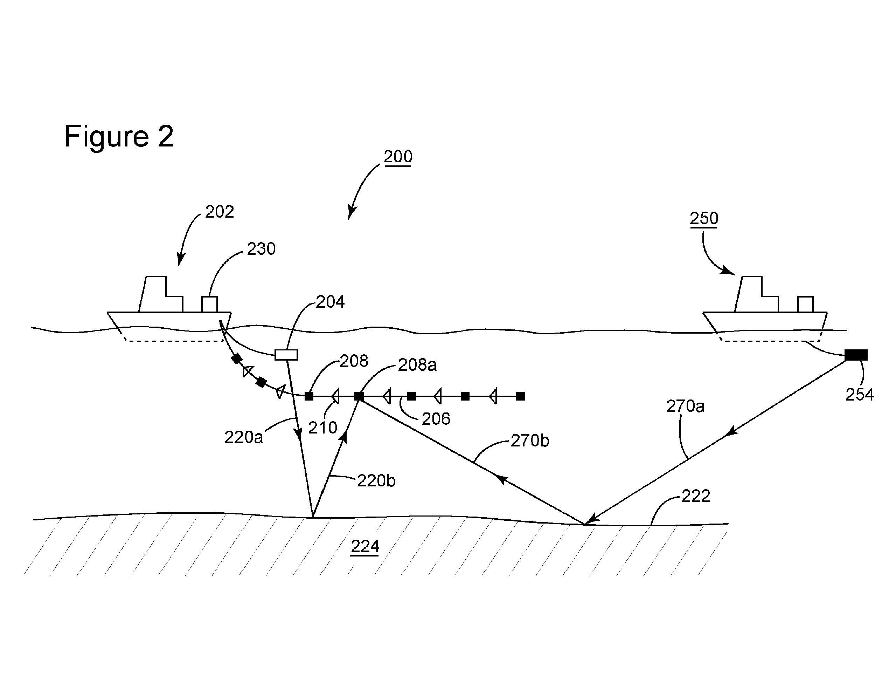

According to an exemplary embodiment illustrated in Figure 2, a seismic survey system 200 includes at least one vessel 202 that tows a seismic source 204 and one or more streamers 206. Source 204 may include at least one airgun, vibratory source, or a combination thereof. The streamer 206 includes plural seismic sensors 208. A seismic sensor may include a geophone, a hydrophone, an accelerometer, a particle motion sensor, a differential pressure sensor, or other sensors designed to receive acoustic or elastic energy, or a combination of them. For example, a 4C seismic sensor may include a hydrophone and three accelerometers. Birds 210 may be distributed along the streamers to achieve desired shapes for them, e.g., curved shapes, straight lines, slanted shapes, etc.

A seismic wave 220a emitted by the source 204 propagates toward the sea bed 222 and may get reflected. Source 204 may be a marine airgun, a marine vibrator (towed or stationary), a land dynamite or vibrator, or other acoustic energy source. The reflected wave 220b may be recorded by seismic sensor 208a. Of course, the seismic wave 220a may enter the subsurface 224 and get reflected there by an interface and then recorded by a sensor. All these elements discussed until now belong to the first seismic survey system 200.

It is possible that a second seismic survey system 250 takes place away from the first system 200 but still close enough so that energy generated by the seismic source 254 propagates as a wave 270a and after it gets reflected at the sea bed 222 (or another interface in the subsurface), the reflected wave 270b is also recorded by the seismic sensor 208a. This recording corresponding to the second seismic vessel 250 produces the interference noise.

The seismic vessel may also include a control device 230 (e.g., processing system) that is capable to receive and process the recorded seismic data from the seismic sensors. Alternatively, the control device 203 may provide minimum processing and the data is transferred to a ground facility for further processing.

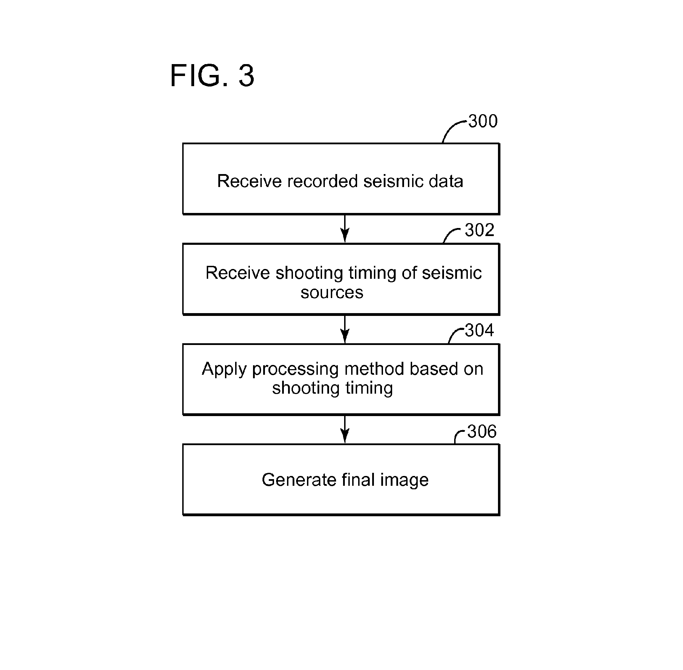

Either on the vessel in the control device or at the ground facility, the recorded data from the seismic sensors is received in step 300 as illustrated in Figure 3. Then, in step 302, the timing when the seismic sources of the first and second seismic surveys is received from the operators of the surveys. As noted above, this time is not calculated or determined from the recorded data as in the traditional methods. In step 304, a processing method is applied to the received seismic data, based on the known (actual) relative shooting timing of the seismic sources of the first and second seismic surveys. Assuming for simplicity, that the first seismic survey has a single source that is shot at t1 and the second seismic survey has a single source that is shot at t2, the actual relative shooting timing is the value of t2-t1. However, this step may use the actual shooting timing (e.g., the values of t1 and t2 instead of the actual relative shooting timing. The processing methods discussed herein are scalable to n seismic survey, i.e., the methods may be applied when more than two seismic surveys are performed at the same time. In this case, the actual relative shooting timing of the source of the first survey and the source of nth survey is necessary to be known. The processing method removes part or all of the interference noise. The applied processing method may be any of a number of methods to be discussed next. In step 306, the final image of the subsurface is generated based on the seismic data from which the interference noise has been removed.

The various processing methods are now discussed in more detail. A first processing method is one in which the interference noise appears continuous in the shot domain. For such a basic modeling, if the interference noise has a different apparent dip compared to the main seismic signal (the one coming from the seismic source of the first seismic survey), it can be filtered. Many types of modelling can be used for the filtering process, e.g., muting in the frequency-wavenumber (FK) domain, the tau-p or Radon domain, etc. Alternatively, a convolution filter can be designed to attenuate the energy at the relevant apparent dip range. The input for this algorithm may be 2D, e.g., in the marine context cable-by-cable, or 3D by using receivers located on more than one cable. The model may be derived using a single component, for example the hydrophone, or to simultaneously satisfy more than one component, for example hydrophone and at least one particle velocity sensor. Filtering in 3D may be more accurate, especially when the interference noise comes from the broadside direction, i.e.,

travels substantially in a direction perpendicular to the streamer. In the marine hydrophone only context, the cable spacing often means 3D transforms are not possible (due to aliasing). However, where accelerometers are also available, the extra information from the accelerometers may provide dealiasing benefits.

It is noted that some shots may not be affected by the interference noise while others may be only marginally affected. When the timing of the interference noise is directly known, the interference noise model can be restricted to the times and offsets that are affected. This would involve firstly calculating an interference noise model with any of the existing approaches, and then muting the noise model so it may only contain energy at the anticipated travel times and offsets. In some cases this would mean not requiring a noise model for shots that are known not to be affected by interference noise. This approach allows improved parameterisation and more effective noise attenuation.

Another processing method is impulsive denoise. In the shot domain the interference noise is continuous with offset. However, in other domains, e.g., receiver domain, common channel domain, common middle point (cmp) domain, offset volume domain, etc., the interference noise appears impulsive. The impulsive noise technique can be considered by: 1) noise flagging followed by 2) noise removal/signal interpolation. Such an algorithm is described in Gulunay et al., "Seismic interference noise attenuation," 74th SEG international conference meeting, 2004. In this method the noise removal/signal interpolation step is comprised of fx reconstruction where affected traces are reconstructed from surrounding data which is not contaminated by the interference noise. Steeply dipping signal can at times be mistaken for interference noise, so careful parameterization of the method is necessary. The application of impulsive denoise can be improved through use of a model space which may partially distinguish signal and noise, for example based on apparent dip. Such a scheme is now illustrated.

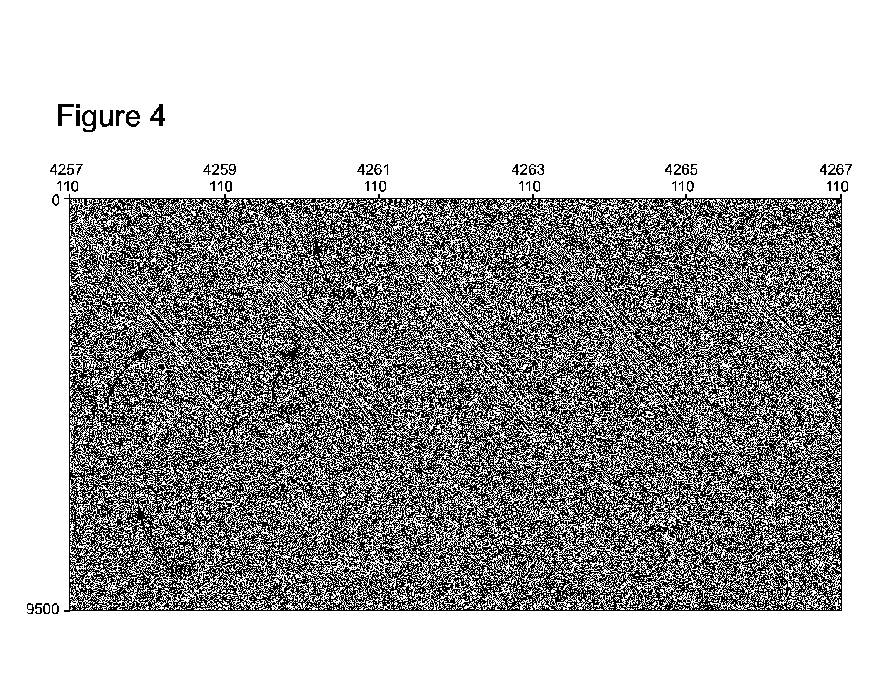

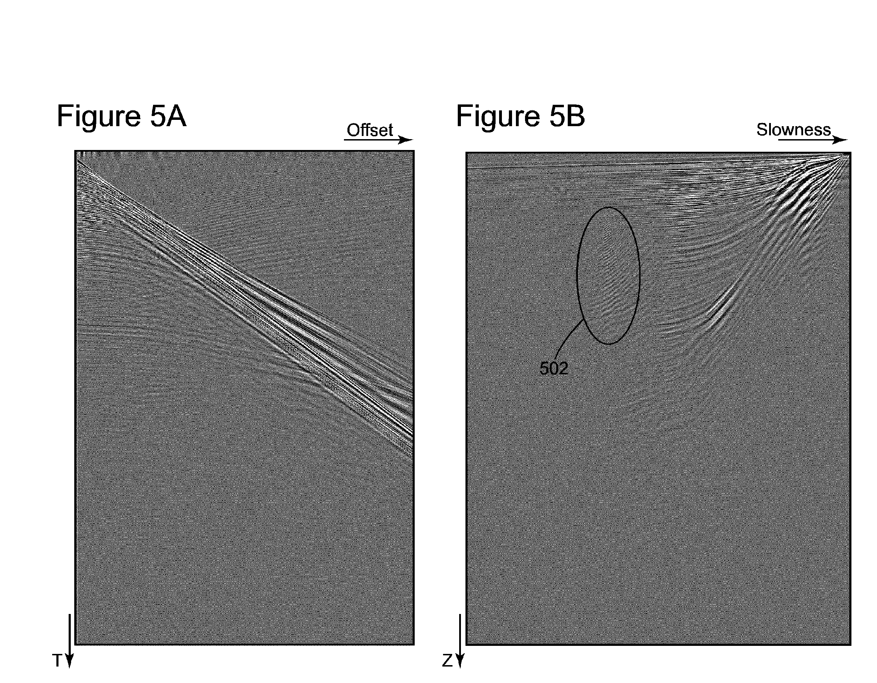

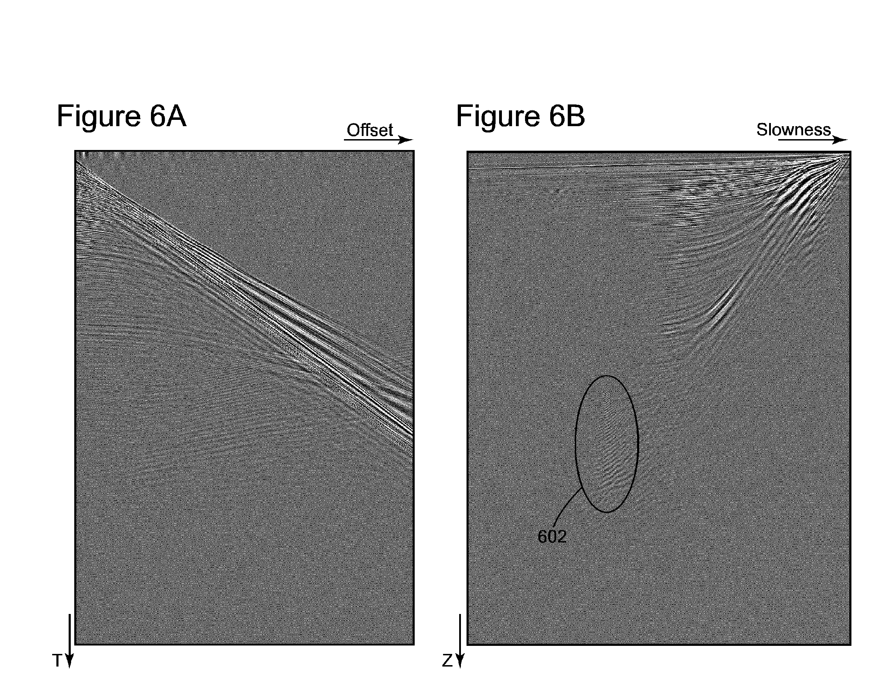

Figure 4 shows interference noise regions 400 and 402 recorded together with the main seismic data 404 and 406. When data corresponding to a first shot, see Figure 5A, is transformed in another domain, for example, the tau-p domain as illustrated in Figure 5B, the interference noise generated by the second survey corresponds to 502. In this example the interference noise largely occupies a different area of the tau-p space to the signal. For a second shot as illustrated in Figure 6A, the interference noise corresponds to 602, which is at a different time than the noise 502.

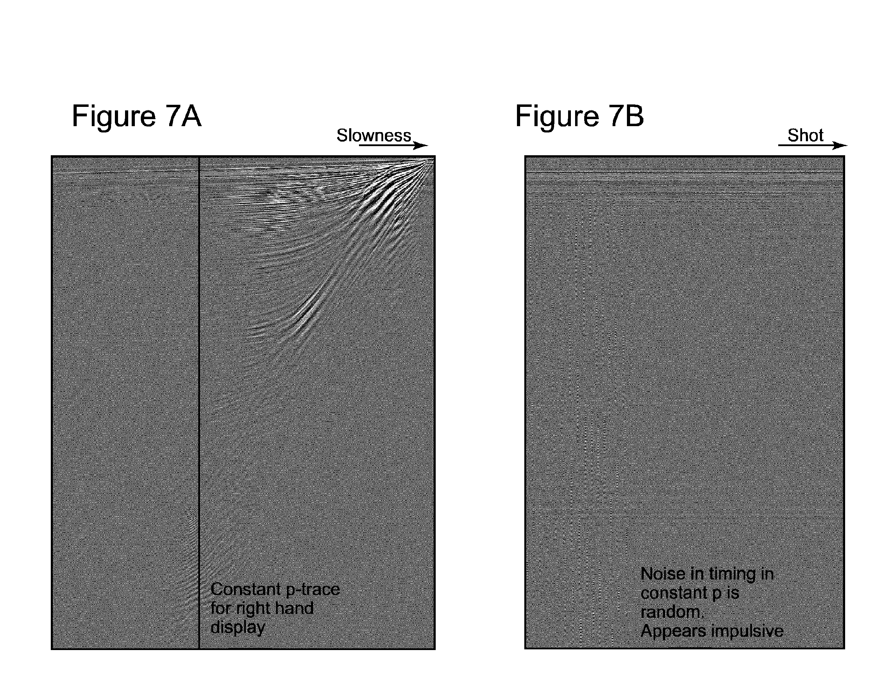

When the seismic data in the tau-p domain as illustrated in Figure 7A is re-ordered to the constant p-shot domain as illustrated in Figure 7B, the interference noise appears random, or impulsive. As there is often already a separation between signal and noise in this domain, the impulsive denoise scheme outlined earlier can be applied more effectively.

When the interference noise is low in amplitude compared to the signal, it can be difficult to parameterise thresholds to identify the noise, especially where the signal has high apparent dip. When the timing of the interference noise is directly known, the interference noise model can be restricted to times and offsets that are affected. This can allow improved parameterisation and more effective noise attenuation. The model domain may be in 2D (e.g., tau-p) or 3D (e.g., tau-px-py).

Impulsive denoise can be repeated in more than one domain. For example, the impulsive denoise may be performed in the receiver domain and the common channel domain independently. This approach provides two different estimates of noise which can be combined to improve the interference noise attenuation.

Another processing method is the iterative impulsive denoise. When data is sorted in a domain where the interference noise appears impulsive, e.g., receiver domain, common channel domain, cmp domain, offset volume domain, etc., the processes discussed above with regard to the impulsive denoise may be employed.

When the interference noise is low in amplitude compared to the signal, it can be hard to parameterise the algorithm to effectively attenuate the noise while at the same time preserve the signal. When this is the case, and when the timing of the noise is known in advance, it can be advantageous to align the interference noise. This involves applying a different timeshift for each trace in the gather so that the interference noise is aligned. By aligning the interference noise, the signal appears as impulsive. It can then be possible to make a signal model with the same impulsive denoise techniques outline above when discussing the impulsive denoising.

After subtracting the signal model from the data, any residual signal may once again be aligned (by the reverse of the time shifts applied in the previous step). Finally, a second pass of impulsive denoise can be used, this time to attenuate the interference noise. As the data is relatively signal free at this point, more harsh parameterisation of denoise can be used.

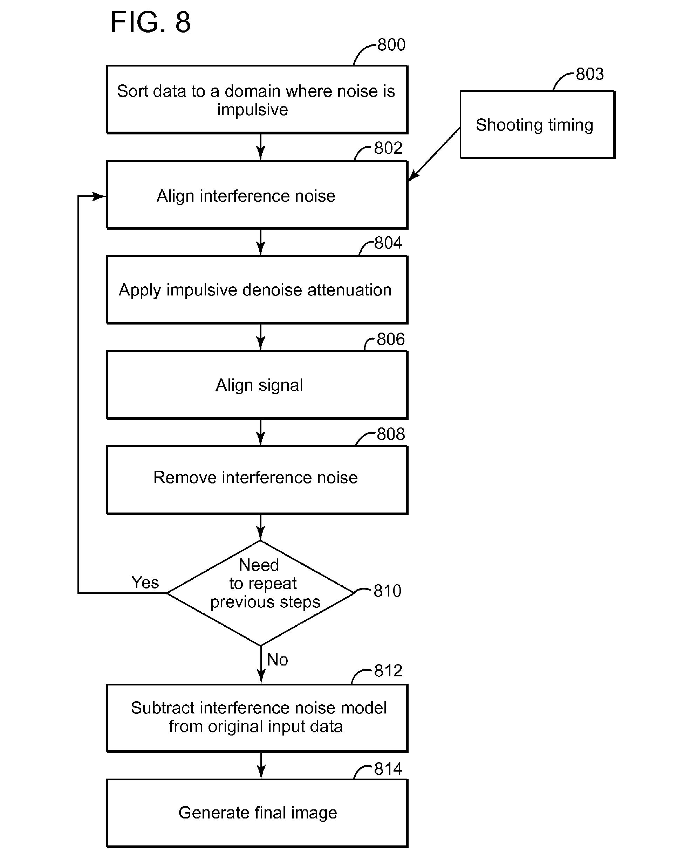

The procedure just discussed can be summarized as an iterative process as follows: in step 800 as shown in Figure 8, sort the recorded seismic data to a domain where the interference noise appears impulsive; in step 802 align the interference noise - this is achieved based on the knowledge of the shooting timing of the sources in the first and second seismic survey and it is provided in step 803; in step 804 remove the main signal with impulsive denoise attenuation and add the main signal estimate to a signal output dataset; in step 806 align the main signal; in step 808 remove the interference noise with impulsive denoise attenuation and add the noise estimate to a noise output dataset. In step 810, determine if necessary to repeat steps 802 to 808 and repeat these steps if necessary. The steps may be repeated a constant number of times based on user tests, or by iterating until a user specified percentage of the energy of the input data has been described by the noise and signal models.

To obtain the denoised data, in step 812 subtract the interference noise model made from successive applications of steps 802 to 808 from the original input data and then generate in step 814 the final image of the subsurface from the denoised data. The process can be extended to the case where there is more than one source of interference noise apparent in the data by aligning the different interference noises one at a time.

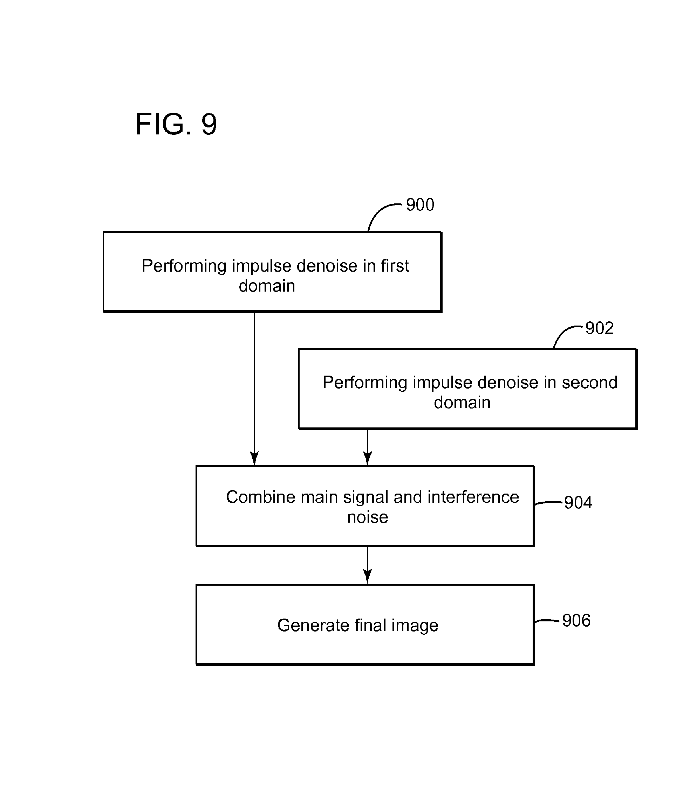

The above procedure requires knowledge of the relative timing of the noise. This timing can be calculated from the data, or provided up front with knowledge of the timing of the interference noise source. Also, knowledge of the timing and duration of the noise can be used to restrict the noise model with each application of impulsive denoise. The process illustrated in Figure 8 can be repeated in more than one domain. For example, as illustrated in Figure 9, the process may be performed in step 900 in the receiver domain and then in step 902 in the common channel domain. These two steps provide two different estimates of the main signal and the interference noise, which can be combined in step 904 to improve the interference noise attenuation. Then, based on the results of step 904, the final image of the subsurface may be generated in step 906.

Still another processing method is the joint modelling. This alternative algorithm derives models of the main signal and interference noise simultaneously in a single inversion problem. This processing may require that the seismic data be sorted to a domain where the interference noise is impulsive and the relative timing of the interference noise is known either through calculation from the data or by being provided in advance.

The seismic data (referred to herein as "seismic data d") corresponds to the actual data measured by the seismic sensors due to the firings of the seismic sources. The seismic sources include the one or more seismic sources of the first seismic survey as well as the one or more seismic sources of the second seismic survey (i.e., the interfering seismic surveys). The simultaneous or near simultaneous firing of the seismic sources causes significant energy from all of these firings to be present in the seismic data vector d. Models that describe the geology that affects the source energy are associated with linear operators L that describe the physics of the source mechanisms, the wave propagation and the survey geometry. The seismic data vector d may then be characterized as a function of the models and the linear operators.

In the general sense, when a linear model m is derived for input data, the following equation needs to be solved: d = Lm, where d is the input data (e.g., a group of traces), m is the model of the data (non-limiting examples include FK domain, linear Radon, parabolic Radon, hyperbolic Radon), and L is the linear operator that makes the transition from the model space to the data space. The above equation may be solved in many ways, e.g., calculating the inverse of L, conjugate gradients, LU decomposition, Cholesky factorisation, etc.

In the case of joint modelling, two models are found simultaneously; one for the main signal and one for the interference noise. In this case, the problem can be outlined as: $d = \begin{pmatrix} L_s & D_n L_n \end{pmatrix} \begin{pmatrix} m_s \\ m_n \end{pmatrix}$, where $D_n$ is a dithering operator to introduce the timing of the interference noise, $L_s$ is the linear operator for the main signal, $L_n$ is the linear operator for the interference noise, $m_s$ is the signal model, and $m_n$ is the noise model.

The linear operators may represent, but are not limited to, the reverse slant stack or reverse parabolic stack. In one application, the same linear operator can be used for the main signal and interference noise, i.e., $L_s = L_n = L$. In another application different linear operators may be used. For example, the $L_s$ operator may be a reverse parabolic stack, and the $L_n$ operator may be a reverse slant stack.

Once a least squares representation of the models have been found, it is usually necessary to make a new solution with model space weighting. This can be achieved directly with an l1 norm solver, or by weighting the linear transfer matrices based on the result from a previous iteration. Alternatively, the model weights can be set based on an earlier estimate of interference noise from the previous processing methods.

To summarize the joint modelling processing, in step 1000 the data is sorted to a domain there the interference noise is impulsive. In step 1002, the known relative timing of the interference noise is received. In step 1004, two models $m_s$ and $m_n$ are simultaneously calculated based on the relative timing of the interference noise and two operators $L_s$ and $L_n$. In step 1006, a new solution with model space weighting is performed and in step 1008 the final image of the subsurface is calculated.

It is noted that the above processing methods work best when a good recording of the main signal and interference noise is achieved. For this reason, it is preferred to make a continuous recording of the seismic data, i.e., to record even during a conventional 'lag time' of 1 to 2 seconds between trace recordings or otherwise potential interference noise in the lag time may be missed.

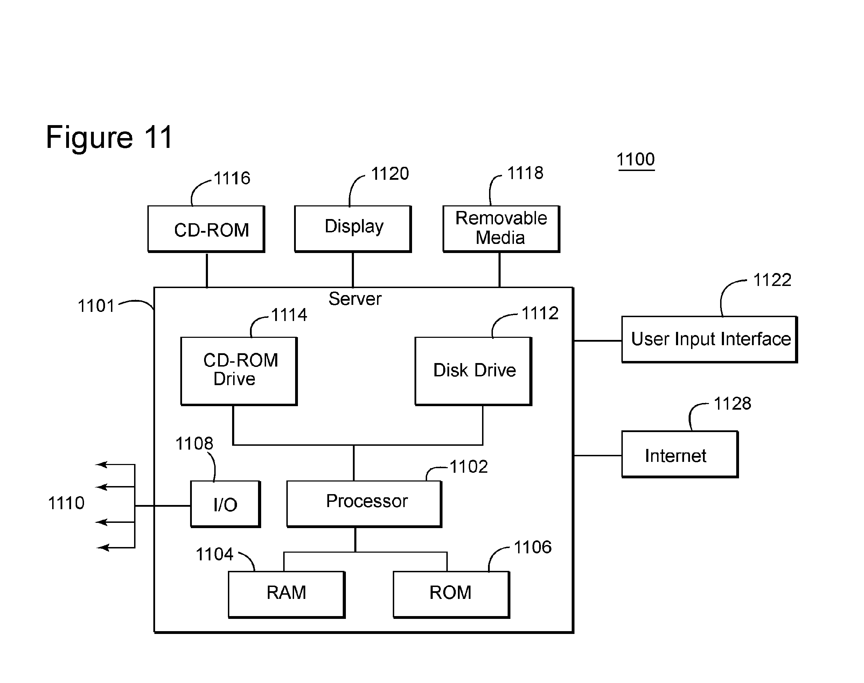

The above methods and mechanisms may be implemented in a computing system specifically configured to calculate the interference noise. An example of a representative computing system capable of carrying out operations in accordance with the exemplary embodiments is illustrated in Figure 11. Hardware, firmware, software or a combination thereof may be used to perform the various steps and operations described herein.

The exemplary computing system 1700 suitable for performing the activities described in the exemplary embodiments may include server 1101. Such a server 1101 may include a central processor (CPU) 1102 coupled to a random access memory (RAM) 1604 and to a read-only memory (ROM) 1106. The ROM 1106 may also be other types of storage media to store programs, such as programmable ROM (PROM), erasable PROM (EPROM), etc. The processor 1102 may communicate with other internal and external components through input/output (I/O) circuitry 1108 and bussing 1110, to provide control signals and the like. The processor 1102 carries out a variety of functions as is known in the art, as dictated by software and/or firmware instructions.

The server 1101 may also include one or more data storage devices, including a hard drive 1112, CD-ROM drives 1114, and other hardware capable of reading and/or storing information such as DVD, etc. In one embodiment, software for carrying out the above discussed steps may be stored and distributed on a CD-ROM 1616, removable memory device 1118 or other form of media capable of portably storing information. These storage media may be inserted into, and read by, devices such as the CD-ROM drive 1614, the disk drive 1112, etc. The server 1101 may be coupled to a display 1120, which may be any type of known display or presentation screen, such as LCD displays, LED displays, plasma display, cathode ray tubes (CRT), etc. A user input interface 1122 is provided, including one or more user interface mechanisms such as a mouse, keyboard, microphone, touch pad, touch screen, voice-recognition system, etc.

The server 1101 may be coupled to other computing devices, such as the landline and/or wireless terminals via a network. The server may be part of a larger network configuration as in a global area network (GAN) such as the Internet 1128, which allows ultimate connection to the various landline and/or mobile client devices. The computing device may be implemented on a vehicle that performs a land seismic survey.

The disclosed exemplary embodiments provide a system and a method for removing or reducing interference noise in seismic data. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A method for determining interference noise recorded in a first seismic survey of a subsurface generated by a source in a second seismic survey, the method comprising:

   receiving (300) seismic data recorded by seismic sensors of the first seismic survey, wherein the seismic data includes seismic waves that originate from the first seismic survey and seismic waves that originate from the second seismic survey;
   receiving (302) actual relative shooting timing of seismic sources of the first and second seismic surveys;
   applying (304) a processing algorithm to the seismic data to calculate the interference noise, wherein the processing algorithm that takes into consideration the actual relative shooting timing of the seismic sources; and
   generating (306) a final image of the subsurface based on the recorded seismic data from which the interference noise is subtracted.

2. The method of Claim 1, wherein the recorded seismic data from which the interference noise is subtracted is free of energy from the second seismic survey.

3. The method of Claim 1, wherein the step of applying comprises:

   sorting or receiving the recorded seismic data in the shot domain; and
   filtering out the interference noise.

4. The method of Claim 3, wherein the step of filtering out comprises:

   muting in the frequency-wavenumber domain, or
   muting in the tau-p domain, or
   muting in the radon domain.

5. The method of Claim 1, wherein the step of applying comprises:

   sorting the recorded seismic data in a domain in which the interference noise appears imulsive; and
   applying impulsive denoise.

6. The method of Claim 1, wherein the step of applying comprises:

   transforming the recorded seismic data to a model space that may at least partially separate signal and interference noise in which the interference noise appears impulsive; and
   applying impulsive denoise.

7. The method of Claim 1, wherein the step of applying comprises:

   sorting the recorded seismic data to a domain where the interference noise appear impulsive;
   aligning the interference noise;
   removing a main signal with impulsive denoise attenuation;
   aligning the main signal;
   removing the interfence noise with impulsive denoise attenuation; and
   subtracting the interference noise from the recorded seismic data.

8. The method of Claim 1, wherein the step of applying comprises:

   sorting the recorded seismic data into a domain in which the interference noise is impulsive;
   simultaneously calculating a main signal model and a noise model based on the recorded seismic data, an operator for the main signal, an operator for the interference noise, and an operator that takes into account the shooting timing; and
   calculating the recorded seismic data from which the interference noise is subtracted.

9. The method of Claim 1, further comprising:

   receiving actual positions of the seismic sources of the first and second seismic surveys.

10. The method of Claim 1, wherein the recorded seismic data is continuously recorded with no lag time.

11. The method of Claim 1, wherein the actual relative shooting timing of the seismic sources is the difference in actual shooting timing of the seismic sources.

12. A method for determining interference noise recorded in a first seismic survey of a subsurface generated by a source in a second seismic survey, the method comprising:

   receiving (300) seismic data recorded by seismic sensors of the first seismic survey, wherein the seismic data includes seismic waves that originate from the first seismic survey and seismic waves that originate from the second seismic survey;

receiving (302) actual shooting timing and coordinates of seismic sources of the first and second seismic surveys;

applying (304) a processing algorithm to the seismic data to calculate the interference noise, wherein the processing algorithm that takes into consideration the actual shooting timing and the coordinates of the seismic sources; and

generating (306) a final image of the subsurface based on the recorded seismic data from which the interference noise is subtracted.

13. A computing device (1100) for determining interference noise recorded in a first seismic survey of a subsurface generated by a source in a second seismic survey, the computing device comprising:

an interface (1108) that receives seismic data recorded by seismic sensors of the first seismic survey, wherein the seismic data includes seismic waves that originate from the first seismic survey and seismic waves that originate from the second seismic survey;

the interface (1108) further receives actual relative shooting timing of seismic sources of the first and second seismic surveys; and

a processor (1102) connected to the interface (1108) and configured to

apply a processing algorithm to the seismic data to calculate the interference noise, wherein the processing algorithm that takes into consideration the actual relative shooting timing of the seismic sources, and

generate a final image of the subsurface based on the recorded seismic data from which the interference noise is subtracted.

14. The device of Claim 13, wherein the recorded seismic data from which the interference noise is subtracted is free of energy from the second seismic survey.

15. The device of Claim 13, wherein the processor is further configured to:

sort or receiving the recorded seismic data in the shot domain;

filter out the interference noise;

mute a noise model in the frequency-wavenumber domain, or

mute a noise model in the tau-p domain, or

mute a noise model in the radon domain.

# Figure 1
## (Background Art)

EP 2 730 949 A2

EP 2 730 949 A2

Figure 2

# FIG. 3

```
                                          ┌─300
┌────────────────────────────────────────┐
│                                         │
│        Receive recorded seismic data    │
│                                         │
└────────────────────────────────────────┘
                     │
                     ▼          ┌─302
┌────────────────────────────────────────┐
│                                         │
│      Receive shooting timing of seismic │
│                 sources                 │
└────────────────────────────────────────┘
                     │
                     ▼          ┌─304
┌────────────────────────────────────────┐
│                                         │
│      Apply processing method based on   │
│              shooting timing            │
└────────────────────────────────────────┘
                     │
                     ▼          ┌─306
┌────────────────────────────────────────┐
│                                         │
│           Generate final image          │
│                                         │
└────────────────────────────────────────┘
```

Figure 4

Figure 5A

Offset →

T ↓

Figure 5B

Slowness →

502

Z ↓

Figure 6B

602

Slowness

Z

Figure 6A

Offset

T

## Figure 7A

Slowness →

Constant p-trace
for right hand
display

## Figure 7B

Shot →

Noise in timing in
constant p is
random.
Appears impulsive

EP 2 730 949 A2

# FIG. 8

```
                                    ┌─800
         ┌──────────────────────────────────┐           ┌─803
         │ Sort data to a domain where noise │    ┌──────────────────────┐
         │            is impulsive           │    │    Shooting timing    │
         └──────────────────────────────────┘    └──────────────────────┘
                         │                                    │
                         ▼          ┌─802                     │
         ┌──────────────────────────────────┐ ◄──────────────┘
    ┌───►│        Align interference noise    │
    │    └──────────────────────────────────┘
    │                    │
    │                    ▼          ┌─804
    │    ┌──────────────────────────────────┐
    │    │   Apply impulsive denoise attenuation │
    │    └──────────────────────────────────┘
    │                    │
    │                    ▼          ┌─806
    │    ┌──────────────────────────────────┐
    │    │            Align signal            │
    │    └──────────────────────────────────┘
    │                    │
    │                    ▼          ┌─808
    │    ┌──────────────────────────────────┐
    │    │       Remove interference noise    │
    │    └──────────────────────────────────┘
    │                    │
    │                    ▼
    │               ╱ Need  ╲
   Yes            ╱ to repeat ╲        ┌─810
    └───────────◄  previous steps ►
                  ╲           ╱
                   ╲         ╱
                        │ No
                        ▼          ┌─812
         ┌──────────────────────────────────┐
         │  Subtract interference noise model │
         │       from original input data     │
         └──────────────────────────────────┘
                        │
                        ▼          ┌─814
         ┌──────────────────────────────────┐
         │        Generate final image        │
         └──────────────────────────────────┘
```

# FIG. 9

```
                                        ┌─ 900
        ┌─────────────────────────────┐
        │  Performing impulse denoise in first
        │            domain            │
        └─────────────────────────────┘
                                              ┌─ 902
                        ┌───────────────────────────────┐
                        │  Performing impulse denoise in second
                        │            domain             │
                        └───────────────────────────────┘
                    │                   │
                    ▼                   ▼
        ┌─────────────────────────────────┐
        │  Combine main signal and interference  ├─ 904
        │            noise                │
        └─────────────────────────────────┘
                        │
                        ▼
        ┌─────────────────────────────────┐
        │       Generate final image      ├─ 906
        └─────────────────────────────────┘
```

# FIG. 10

```
                              ┌─1000
┌─────────────────────────────┐
│                             │
│      Sort seismic data      │
│                             │
└─────────────────────────────┘
              │
              ▼               ┌─1002
┌─────────────────────────────┐
│   Receive known relative    │
│    timing of interference   │
│           noise             │
└─────────────────────────────┘
              │
              ▼               ┌─1004
┌─────────────────────────────┐
│ Simultaneously calculate    │
│        two models           │
│                             │
└─────────────────────────────┘
              │
              ▼               ┌─1006
┌─────────────────────────────┐
│ New solution with model     │
│   space weighting is        │
│       calculated            │
└─────────────────────────────┘
              │
              ▼               ┌─1008
┌─────────────────────────────┐
│ Final image of subsurface   │
│      is calculated          │
│                             │
└─────────────────────────────┘
```

## Figure 11

EP 2 730 949 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100097885 A

**Non-patent literature cited in the description**

- **N. GULUNAY.** Two different algorithms for seismic interference noise attenuation. *The Leading Edge,* February 2008

- **GULUNAY et al.** Seismic interference noise attenuation. *74th SEG international conference meeting,* 2004